# EUROPEAN PATENT APPLICATION

(11) **EP 2 654 180 A1**
(43) Date of publication of application: **23.10.2013**
(21) Application number: 12164431.4
(22) Date of filing: 17.04.2012
(51) Int. Cl.: H02K 1/27, H02K 7/18

(54) **Rotor for an electrical machine**

(71) Applicant: Siemens Aktiengesellschaft, 80333 München (DE)
(72) Inventor: Colton, Jessica L., 7400 Herning (DK); Semmer, Silvio, 7330 Brande (DK); Urda, Adriana Cristina, 5230 Odense M (DK)

(57) **Abstract**

Rotor for an electrical machine (12), comprising a plurality of permanent magnets (14), pole shoes (16) and yokes (15) circumferentially arranged as rotor (13), each pole shoe (16) being connected to or integral with one of the yokes (15), the yokes (15) and the permanent magnets (14) being alternatingly arranged as circumference of the rotor (13), wherein the pole shoes (16) are spaced away from each other in the circumferential direction so as to define gaps between two adjacent pole shoes (16) to eliminate paths for leakage flux.

## Description

The invention relates to a rotor for an electrical machine, comprising a plurality of permanent magnets, pole shoes and yokes circumferentially arranged around the rotor, each pole shoe being connected to or integral with one of the yokes, the yokes and the permanent magnets being alternatingly arranged around the circumference of the rotor.

Electrical machines for generating an electricity or mechanical torque having an rotatable arrangement of a rotor with respect to a stator are well established in the state of art. Typically, a plurality of permanent magnets are circumferentially arranged around the rotor. Pole shoes having yokes are arranged intermediate the individual permanent magnets and made from a magnetic permeable materials like, in particular, iron. The pole shoes and yokes provide components for guiding a magnetic flux are usually arranged so that a magnetic field of suitable geometry, in particular in the direction facing the stator, is generated.

Due to reasons of mechanical stability, the pole shoes and yokes are connected with each other by solid components made from a metal or the permanent magnets are embedded in a circumferential solid structure that replaces the circumferential arrangement of pole shoes and yokes. However, this also introduces leaking paths for magnetic flux that is lost and does not contribute to the generation of electricity or mechanical torque when the electrical machine is configured as a generator or a motor.

It is an object of the present invention to provide an improved rotor capable of increasing the efficiency of the electrical machine.

The object is achieved by a rotor of the aforementioned type, wherein the pole shoes are spaced away from each other in the circumferential direction so as to define gaps intermediate adjacent pole shoes to eliminate leaking paths for the magnetic flux.

Hence, the invention proposes minimising magnetic flux guided by magnetic flux guiding components such as pole shoes abutting on each other and concentrating the magnetic flux in the direction facing a stator when the electrical machine is assembled. Magnetic flux guided in magnetic flux guiding components is also called leakage flux that does not contribute to the generation of a mechanical torque in case of the electric machine being configured as a motor or in the generation of an electrical current in case the electrical machine is configured as a generator. The rotor minimizes leakage paths by spacing the pole shoes away from each other. Hence, the electrical machine comprising the rotor features increased efficiency.

Preferably, each pole shoe is spaced away from the adjacent permanent magnets in a radial inward direction. The pole shoes are thus displaced towards the stator adapted to be arranged radial inwards. An air gap is located between each pole shoe and the permanent magnets adjacent thereto. This arrangement addresses the problem of demagnetisation of the permanent magnets that may be caused by strong magnetic fields generated by the stator when a short circuit occurs. The air gap introduced between the permanent magnets and the adjacent pole shoe is located in an area which usually gets demagnetised most in the short circuit case. Displacement of the pole shoes in the radial inward direction may be achieved to provide a yoke of sufficient length.

In an alternative embodiment of the invention, it is suggested to provide the permanent magnets with cut-outs located in areas adjacent to the pole shoes so that each pole shoe is spaced away from the adjacent permanent magnets in the radial inward direction. Hence, the area prone to demagnetisation is removed. Reduction of the effects of demagnetisation increases the lifespan of the rotor. As a consequence, the electrical machine having the rotor may operate reliably for prolonged periods of time.

In a preferred embodiment of the invention, each pole shoe has an arcuate section adapted to face the stator of the electrical machine. The arcuate section is configured so that the magnetic field erected towards the stator has a sufficient geometry for the efficient generation of mechanical torque or for efficiently generating electrical currents by means of electromagnetic induction.

In order to eliminate leaking paths of magnetic flux occurring on the side of the rotor opposite the side facing the stator, the yokes are preferably spaced apart from each other in the circumferential direction of the rotor without being connected by magnetic flux guiding components. In particular, the yokes are not connected by components made of a metal such as, amongst others, iron. Elimination of the back side leaking parts further improves the efficiency of the electrical machine as unnecessary leakage flux is omitted. The permanent magnets of the rotor are provided with sufficient thickness so as to ensure mechanical stability.

In one preferred embodiment of the invention, the yoke is shaped as a wedge with a triangular cross-section. The permanent magnets abutting on the wedge-shaped yokes comprise tampered surfaces that are directed towards the stator so that the concentration of magnetic flux in the area intermediate to the rotor and the stator is increased.

The invention further relates to an electrical machine comprising a stator with a plurality of conductive windings and the rotor as described herein before. The rotor is rotatably arranged with respect to the stator. Elimination of leakage paths and concentration of the magnetic flux towards the stator increases the efficiency of the electrical machine that may be arranged as a generator or a motor.

Preferably, the electrical machine is configured as the generator of a wind turbine. The generator features an increased efficiency that supports sustainable generation of electricity gained from a renewable resource. Consequently, a negative environmental impact, in particular the emission of CO₂, may be minimized.

In the following, the invention is described in detail with reference to specific embodiments and with reference to figures, wherein
- fig 1: shows a schematic sectional view of a rotor and a stator according to prior art;
- fig. 2: illustrates a rotor according to a first embodiment of the invention in a schematic sectional view; and
- fig. 3: shows a sectional view of a second embodiment of a rotor comprising yokes shaped as wedges.

Like parts are indicated in all figures by like reference symbols.

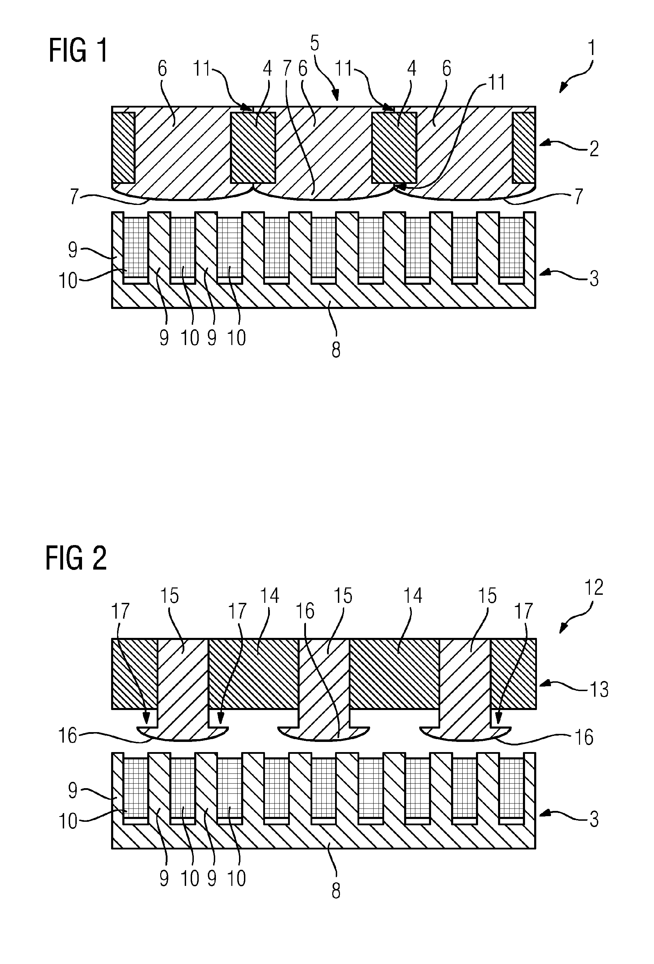

Fig. 1 shows a section of an electrical machine 1 according to prior art. A rotor 2 is rotatably arranged with respect to a stator 3. Electrical machines 1 of this type are well established in the state of the art. A detailed explanation is thus omitted.

In particular, the electrical machine 1 may be configured as a generator or a motor. The sections of the rotor 2 and the stator 3 shown in the figures are shown as linear arrangements for simplicity. It is understood, that both the stator 3 and the rotor 2 have generally annular structures that rotate relative to each other during operation of the electrical machine 1.

The rotor 2 comprises a plurality of permanent magnets 4 arranged around a circumference of the rotor 2. For mechanical stability, the magnets 4 are embedded in a support structure 5 that comprises a plurality of yokes 6 integral with pole shoes 7 projecting radial inwards from the rotor 2. The pole shoes 7 have arcuate sections facing the stator 3 of the electrical machine 1.

The stator 3 comprises an annular base member 8. A plurality of radial protrusions 9 is distributed around a circumference of the stator 3 at regular intervals. The radial protrusions 9 extend from the base member 8 in a radial outward direction. Conductive windings 10 are arranged in gaps bounded by consecutive radial protrusions 9.

The pole shoes 7 of the state of the art solution illustrated in figure 1 abut on each other in the circumferential direction. As a result, front side leaking paths for magnetic flux are established. The front side leakage paths carry magnetic flux that does not contribute to the efficiency of the electrical machine 1 with respect to the generation of a mechanical torque, when the electrical machine 1 is arranged as a motor or the generation of an electricity, when the electrical machine 1 is configured as a generator.

Furthermore, the support structure 5 is made from a metal capable of guiding magnetic flux. All of the yokes 6 are interconnected in the support structure 5 so that additional leakage paths located on the radial outward face of the rotor 2 are provided. The so-called front side and back side leaking paths existing in the rotor 2 according to prior art are, amongst others, provided in areas 11 illustrated in figure 1.

Furthermore, it is known to arrange the permanent magnets 4 of the rotor 2 in a tilted formation, in particular to arrange adjacent permanent magnets in a in a V-shaped configuration.

Fig. 2 shows a sectional view of an electrical machine 12 according to a first embodiment of the invention. The electrical machine 12 may be arranged as a motor or, in an alternative embodiment, as a generator, in particular as a generator for a wind turbine. In comparison to the prior art illustrated in fig. 1, the electrical machine 12 according to the invention features a rotor 13 with improved magnetic properties.

As can be seen in figure 2, a plurality of permanent magnets 14 are circumferentially arranged around the rotor 13. Permanent magnets 14 and yokes 15 are alternatingly arranged. Each yoke 14 is integral with a pole shoe 16 having an arcuate section facing the stator 3 of the electrical machine 12. The permanent magnets 14 are provided with a suitable thickness so as to provide sufficient mechanical stability.

The yokes 15 are provided with an increased length, so that each pole shoe 16 protrudes radial inwards and is spaced away from adjacent permanent magnets 14 in a radial direction. An air gap 17 is provided between each pole shoe 16 and the permanent magnets 14 adjacent to the corresponding pole shoes 16. The air gap 17 minimises demagnetisation caused by short circuits generating large magnetic fields in windings 10 of the stator 3.

Additionally, each pole shoe 16 is spaced apart from adjacent pole shoes 16 in the circumferential direction. Accordingly, the pole shoes 16 do not abut on each other so that front side leakage paths are eliminated.

As leakage paths provided by components abutting on each other or by magnetic flux guiding components are eliminated, leakage flux that is not contributing to the generation of an current in the windings 10 is reduced. Hence, the electrical machine 12 features an improved efficiency.

The yokes 15 are spaced apart from each other in the circumferential direction without being connected by magnetic flux guiding components. Hence, back side leakage paths are also eliminated.

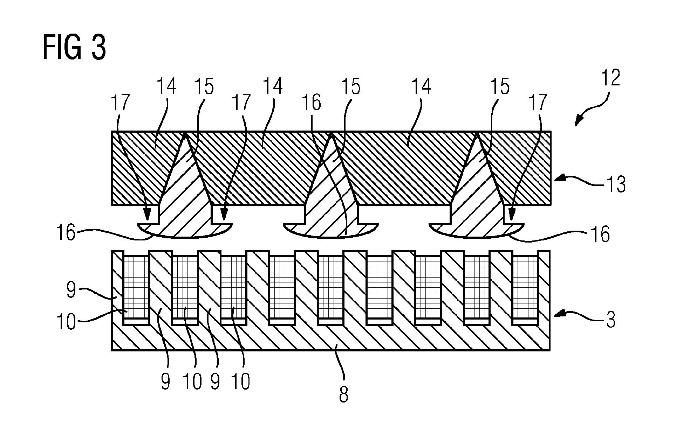

Fig. 3 shows a second embodiment of the invention in a schematic sectional view. The electrical machine 12 illustrated in fig. 3 is configured similarly to the one described herein before with respect to fig. 2.

In contrary to the rotor 13 of the first embodiment, the yokes 15 of the electrical machine 12 of the second embodiment are shaped as wedges with triangular cross-sections. The yokes 15 are arranged intermediate adjacent permanent magnets 14 that comprise correspondingly tapered sides so as to direct the magnetic field towards the stator 3. This advantageously increases the magnetic flux directed towards the stator 3 further increasing the efficiency of the electrical machine 12.

Similar to the first embodiment already described herein before with reference to fig. 2, the electrical machine 12 of the second embodiment eliminates front side and back side leaking paths. In particular, the pole shoes 16 are spaced away from each other in the circumferential direction. The yokes 15 are also spaced away from each other in the circumferential direction. A support structure introducing leaking paths for magnetic flux is omitted. The yokes 15 are not connected to each other by any magnetic flux conducting components eliminating back side leaking paths.

The pole shoes 16 are also spaced away from the annual arrangement of permanent magnets 14 in the radial inward direction. The air gaps 17 extending between the pole shoes 16 and the permanent magnets 14 reduce demagnetisation of the permanent magnets 14, in particular when a short circuit inducing a strong stator field occurs.

In summary, the electrical machine 12 depicted in fig. 2 and 3 features an improved concentration of magnetic flux in the gap arranged between the rotor 13 of the stator 3. Magnetic flux leakage is reduced by omitting flux guiding components on the side of the rotor 13 opposite to the stator 3. Furthermore, the pole shoes 16 do not abut on each other. Spacing the pole shoes 16 apart from each other results in an elimination of front side leaking paths. Hence, the efficiency of the electrical machine 12 is improved, as the fraction of the magnetic flux that either contributes in generation of a torque, when the electrical machine 12 is configured as a motor, or in induction of a current, when the electrical machine 12 is configured as a generator, is increased.

Additionally, introduction of the air gaps 17 provided between the pole shoes 16 and adjacent permanent magnets 14 counters demagnetisation, in particular demagnetisation induced by short circuits that may occur in the windings 10 of the stator 3. The thickness of the permanent magnets 14 may be reduced as the permanent magnets 14 are well protected from demagnetisation by the improved configuration of the rotor 13. Hence, magnetic material may be spared in order to reduce production costs.

Although the present invention has been described in detail with reference to the preferred embodiment, the present invention is not limited by the disclosed examples from which the skilled person is able to derive other variations without departing from the scope of the invention.

## Claims

1. Rotor (13) for an electrical machine (12), comprising a plurality of permanent magnets (14), pole shoes (16) and yokes (15) circumferentially arranged around the rotor (13), each pole shoe (16) being connected to or integral with one of the yokes (15), the yokes (15) and the permanent magnets (14) being alternatingly arranged around the circumference of the rotor (13), **characterized in that** the pole shoes (16) are spaced away from each other in the circumferential direction so as to define gaps intermediate adjacent pole shoes (16) to eliminate leaking paths for the magnetic flux.

2. Rotor (13) according to claim 1, **characterized in that** each pole shoe (16) is spaced away from the adjacent permanent magnets (14) in a radial inward direction.

3. Rotor (13) according to claim 2, **characterized in that** each pole shoe (16) has an arcuate section adapted to face a stator (3) of the electrical machine (12).

4. Rotor (13) according to one of the previous claims, **characterized in that** the yokes (15) are spaced apart from each other in the circumferential direction without being connected by a magnetic flux guiding element.

5. Rotor (13) according to one of the previous claims, **characterized in that** the yoke (15) is shaped as a wedge with a triangular cross-section.

6. Electrical machine (12) comprising a stator (3) with a plurality of conductive windings (10) and a rotor (13) according to one of the previous claims that is rotatably arranged with respect to the stator (3).

7. Electrical machine (12) according to claim 6, **characterized in that** the electrical machine (12) is configured as a generator.

8. Electrical machine (12) according to claim 7, **characterized in that** the electrical machine (12) is configured as the generator of a wind turbine.
